Europäisches Patentamt

European Patent Office

Office européen des brevets

(19)

(11) Numéro de publication : **0 602 142 B1**

(12) **FASCICULE DE BREVET EUROPEEN**

(45) Date de publication du fascicule du brevet :
19.07.95 Bulletin 95/29

(51) Int. Cl.⁶ : **G01N 11/14**

(21) Numéro de dépôt : **92919213.6**

(22) Date de dépôt : **28.08.92**

(86) Numéro de dépôt international :
**PCT/FR92/00829**

(87) Numéro de publication internationale :
**WO 93/05383 18.03.93 Gazette 93/08**

(54) **DISPOSITIF DE MESURE DE LA VISCOELASTICITE DES PRODUITS PRESENTANT NOTAMMENT UNE FAIBLE VISCOSITE.**

(30) Priorité : **02.09.91 FR 9110828**

(43) Date de publication de la demande :
**22.06.94 Bulletin 94/25**

(45) Mention de la délivrance du brevet :
**19.07.95 Bulletin 95/29**

(84) Etats contractants désignés :
**AT BE CH DE DK ES FR GB GR IE IT LI LU MC NL SE**

(56) Documents cités :
**WO-A-86/00408
FR-A- 2 531 538
US-A- 1 683 310
US-A- 1 879 626
US-A- 2 096 222
US-A- 2 828 621
US-A- 3 667 286**

(73) Titulaire : **ELF AQUITAINE
Tour Elf,
2, Place de la Coupole,
La Défense 6
F-92400 Courbevoie (FR)**

(72) Inventeur : **EL BOUNIA, Nour-Eddine
665, avenue d'Arthez-de-Béarn
F-64170 Artix (FR)**
Inventeur : **REY, Cathy
Maison "Lucat"
F-40360 Tilh (FR)**

(74) Mandataire : **Levy, David et al
c/o S.A. FEDIT-LORIOT & AUTRES
CONSEILS EN PROPRIETE INDUSTRIELLE
38, Avenue Hoche
F-75008 Paris (FR)**

# Description

La présente invention concerne un dispositif de mesure de la viscoélasticité des produits présentant notamment une faible viscosité.

Il est souvent nécessaire dans la mesure des caractéristiques physico-chimiques d'un produit donné tel qu'une résine, une peinture, une matière plastique, de mesurer et connaître la viscoélasticité du produit concerné.

De nombreux dispositifs de mesure de viscoélasticité ont été proposés. Certains sont constitués par deux lamelles planes entre lesquelles est disposé le produit à mesurer. Un déplacement angulaire d'une lamelle par rapport à l'autre crée un couple de cisaillement dans le produit. La mesure du couple de cisaillement permet de déterminer la viscoélasticité du produit disposé entre les lamelles.

D'autres dispositifs connus sous la désignation générique de rhéomètres du type couette, comportent une coupelle femelle dans laquelle est disposé un organe mâle, les coupelles étant cylindriques et le produit à mesurer étant disposé dans la coupelle femelle. Le produit est cisaillé entre les coupelles dont l'une est fixe et l'autre mobile.

La théorie des rhéomètres du type couette et leur structure est décrite dans "*Initiation à la Rhéologie*", édition de 1983 de la Technique et Documentation (LAVOISIER).

D'autres dispositifs de mesure de viscoélasticité ou Rhéomètres sont décrits dans FR-A-2 531 538, US-A-3 667 286 et US-A-2 828 621.

Un inconvénient grave de tous les Rhéomètres utilisés jusqu'à présent réside dans le fait qu'ils travaillent en atmosphère libre. De ce fait, lorsque le dispositif de mesure est disposé dans un four de chauffage ou un bain d'huile pour amener le produit ou la substance à mesurer à une température prédéterminée qui dépend entre autre de la nature du produit à mesurer, il s'ensuit que dans les produits contenant un solvant, ce dernier s'évapore, en plus ou moins grande quantité et ce, quelle que soit la rapidité d'exécution pour l'introduction du produit dans la coupelle femelle, à l'intérieur du four ou du bain d'huile. Or, l'évaporation du solvant conduit à au moins une modification des caractéristiques physiques du produit. Dès lors, le couple de cisaillement s'en trouve affecté et on aboutit souvent à des résultats erronés.

Un autre inconvénient grave est lié à la structure même des Rhéomètres cylindriques connus. En effet, ces derniers, outre le fait qu'ils sont ouverts et donc aptes à permettre l'évaporation du solvant, sont de dimensions relativement importantes et nécessitent de changer de capteur de mesure du couple de cisaillement à chaque changement de produit de viscosité différente. Il s'ensuit une augmentation du risque de détérioration des capteurs qui sont fort coûteux par ailleurs. De plus, ils se prêtent mal à un mouvement alternatif ou sinusoïdal entre la coupelle mobile et la coupelle fixe, en raison de l'inertie inévitablement produite par le surdimensionnement des coupelles.

La présente invention a pour but de pallier les inconvénients précités et de proposer un dispositif de mesure qui soit étanche, d'encombrement réduit et adaptable sur les viscoélasticimètres utilisés actuellement.

Le préambule de la revendication 1 se réfère au FR-A-2 531 538 et la caractéristique de la présente invention est définie dans la partie caractérisante de la revendication 1.

Un avantage de la présente invention réside dans le fait que le dispositif travaille au milieu étanche, sans évaporation de solvant.

Une autre caractéristique importante est que plusieurs chambres annulaires sont ménagées dans la coupelle femelle, ce qui permet de mesurer la viscoélasticité de produits présentant une très faible viscosité.

En outre, le dispositif selon l'invention est pourvu de moyens d'alimentation directs de produits dans la coupelle femelle, ce qui permet d'éviter toute évaporation de solvant lors de la mise en place du produit à mesurer dans la coupelle femelle.

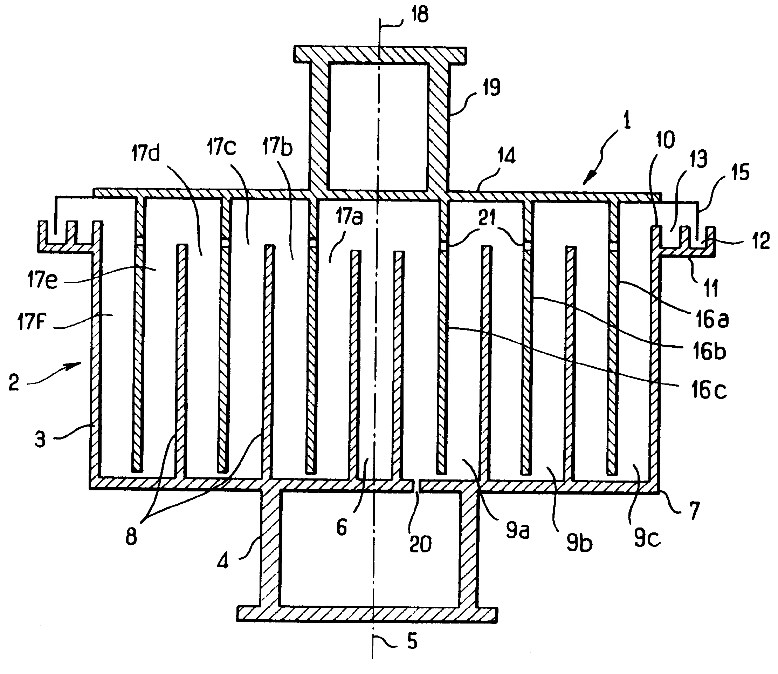

D'autres avantages et caractéristiques apparaîtront plus clairement à la lecture de la description d'un mode de réalisation préféré de l'invention, ainsi que du dessin annexé dans lequel la figure unique est une vue en coupe du dispositif de mesure.

Le dispositif selon l'invention comprend une coupelle mâle 1 et une coupelle femelle 2 constituées par un corps cylindrique 3. La coupelle femelle 2 peut être entraînée en rotation continue ou animée d'un mouvement de rotation alternatif de fréquence déterminée ou encore déplacée verticalement par rapport à la coupelle mâle 1. Les moyens d'entraînement en rotation peuvent être de tout type approprié comme par exemple un moteur, non représenté, solidaire d'une pièce d'entraînement 4 qui tourne autour d'un axe de rotation 5.

La coupelle femelle mobile 2 par rapport à la coupelle mâle fixe 1, comprend un moyeu central creux 6 qui est fermé à sa partie inférieure par le fond 7 du corps 3 et ouvert à sa partie supérieure. De façon concentrique et tout autour du moyeu central 6 sont prévues des parois cylindriques (8a, 8b), par exemple au nombre de deux, qui délimitent entre elles trois chambres annulaires 9a, 9b, 9c. De préférence, la hauteur des parois 8 est supérieure à la hauteur de produit à mesurer introduit dans les chambres 9, comme cela décrit plus loin. L'épaisseur 2 des parois 8 est constante, par exemple égale à 1 mm.

A la partie supérieure du corps 3 et légèrement au-dessous du bord libre 10 dudit corps, est prévu un rebord 11 dans lequel sont ménagées une première rainure cylindrique 12 remplie d'huile et une deuxième rainure cylindrique 13 remplie de solvant.

La coupelle mâle 1 comprend une paroi de fermeture 14 qui est munie d'une jupe périphérique 15 dont le bord libre plonge dans l'huile de la première rainure 12 sans être en contact avec le fond de ladite rainure 12. L'ensemble paroi de fermeture 14, jupe 15 et rainure 12 remplie d'huile constitue un système d'étanchéité qui empêche vers l'extérieur toute évaporation du solvant contenu dans le produit à mesurer et remplissant au moins partiellement les chambres annulaires 9a, 9b, 9c.

Des cloisons de séparation, par exemple au nombre de trois et désignés par 16a, 16b et 16c, sont prévues solidaires de la paroi de fermeture 14, cylindriques et concentriques. Les cloisons 16a à 16c sont disposées à l'intérieur des chambres annulaires 9a à 9c, de manière que chaque cloison délimite à l'intérieur de la chambre annulaire correspondante deux entrefers étroits. Dans l'exemple représenté, on obtient six entrefers étroits 17a à 17f dont les épaisseurs sont choisies de telle sorte que le gradient de cisaillement soit constant d'un entrefer à l'autre. Ceci est obtenu en choisissant les rayons internes des chambres annulaires 9a à 9c de façon que deux rayons internes $R_n/R_{n-1}$ + e = $C^{te}$ et $\leq 1,15$ pour le cas d'entrefers étroits.

Les cloisons 16a à 16 présentent une hauteur telle que leur bord inférieur ne vienne pas en contact avec la paroi de fond du corps 3.

Le produit à mesurer est introduit, par tout moyen approprié tel qu'une seringue, dans la coupelle femelle 2 à travers un orifice 20 ménagé dans la paroi de fond 7. La seringue est maintenue en place pendant la mesure de manière à réaliser une étanchéité du dispositif. Chaque cloison 16a à 16c est pourvue d'un ou plusieurs orifices 21 pourvus en partie supérieure et, en tout cas, au-dessus du niveau du produit, de manière à permettre l'équilibrage des pressions à l'intérieur du dispositif, d'une part, et le passage du produit d'une chambre à l'autre, le trop plein éventuel étant recueilli dans le moyeu central 6, d'autre part.

Un capteur approprié de mesure du couple de cisaillement est monté sur un axe 18 d'une pièce 19 solidaire de la paroi de fermeture 14.

Dans l'exemple représenté, l'épaisseur $\underline{e}$ de chaque paroi du moyeu central, des chambres annulaires et des cloisons de séparation des entrefers est constante et égale à 1 mm. Le rayon $R_1$ du moyeu central est compté à partir de l'axe 5 qui est aligné avec l'axe 18, jusqu'à la face externe de la paroi dudit moyeu central 6. Le rayon interne $R_2$ correspondant au premier entrefer délimité par la paroi du moyeu central et la face en regard ou interne de la cloison de séparation adjacente 16a est également compté à partir de l'axe 5. Les autres rayons $R_3$ à $R_7$ sont comptés de la manière indiquée ci-dessus. On choisit un rapport

$\dfrac{R_2}{R_1}$ - 1,07 car les études et les expérimentations ont montré qu'on obtenait d'excellents résultats avec une telle valeur de rapport. Il s'ensuit que $R_3 = (R_2 + e)$ x 1,07 ; de proche en proche, on calcule la valeur des autres rayons. Dans tous les cas, il faut que $\dfrac{R_2 - R_1}{R_1} \leq 1$ pour pouvoir considérer,

dans le cas d'un entrefer étroit, la contrainte de cisaillement comme constante. En effet, le produit dans chaque entrefer est soumis à un gradient de cisaillement $\dot{\gamma}$. Comme $\dot{\gamma}$ ne dépend que de la contrainte de cisaillement, il est donc lui aussi constant à condition qu'une géométrie donnée soit respectée. Si $\omega$ désigne la vitesse de rotation, on a pour une géométrie couette classique :

$$\dot{\gamma} - \frac{\omega R_1}{R_2 - R_1}$$

où $R_1$ et $R_2$ sont respectivement les rayons intérieur et extérieur de l'entrefer. En considérant des entrefers étroits, comme c'est le cas de la présente invention, et en imposant que le gradient de cisaillement est constant dans tous les entrefers, on détermine la valeur des rayons $R_1$ à $R_7$ indiqués précédemment.

Avec $R_1 = 10$ mm, $\dfrac{R_2}{R_1}$ - 1,07 et $\underline{e} = 1$ mm, on obtient $R_2 = 10,7$ mm ; $R_3 = 12,52$ mm jusqu'à $R_7 = 21,16$ mm.

On a pu démontrer par les calculs et les expérimentations faites avec le logiciel équipant le Rheometrics RDS 7700 II, de la société Rheometrics, que la sensibilité du dispositif selon la présente invention est augmentée d'au moins un facteur de 13 par rapport aux dispositifs de l'art antérieur. Bien évidemment, on peut encore augmenter la sensibilité, en augmentant le nombre des entrefers dont les caractéristiques ont été décrites précédemment.

Grâce au dispositif de la présente invention, il est également possible de mesurer les modules élastiques G′ et visqueux G″ ainsi que la viscosité complexe $\eta$ d'un produit quelconque et même présentant une faible viscosité.

Les dimensions réduites du dispositif selon l'invention ainsi que la nature des matériaux dans lesquels il peut être réalisé le rendent encore plus attractif, car il peut être facilement réalisé par usinage s'il est métallique ou par injection s'il est en matière plastique. Dans ce dernier cas, il peut être du type à usage unique tant son prix de revient serait réduit, comparé au coût des dispositifs de l'art antérieur.

Le fonctionnement du dispositif est le suivant. Dans un four, non représenté, dont la température est portée à une certaine valeur qui dépend du produit à mesurer, ou introduit le dispositif. Après que ce dernier soit porté à une certaine température, on introduit une quantité prédéterminée de produit à mesurer à travers l'orifice d'alimentation 20. Dès que le produit est régulièrement réparti dans les entrefers 17a à 17f grâce aux espaces ménagés entre les bords libres des cloisons de séparation 16à à 16c, des orifices de communication 21 et, éventuellement, du trop plein s'écoulant à l'intérieur du moyeu central 6, en entraîne en rotation continue ou alternative, selon le mode opératoire choisi, la coupelle femelle 2. Le mouvement relatif entre les coupelles mâle 1 et femelle 2 introduit dans chaque entrefer un couple de cisaillement qui est mesuré par le capteur de mesure. Le couple total de cisaillement mesuré se calcule à partir de la formule :

$$C_t = \sum_{i=1}^{6} C_i$$

avec $C_i = \dfrac{\tau . 4\, \tau h. (R_i + e)^2 . (R_i + 1)^2}{(R_i + e)^2 + (R_i + 1)^2}$; i étant entier et compris entre 1 et 6 pour le cas considéré, h étant la hauteur de produit dans la coupelle femelle et $\tau$ étant la contrainte de cisaillement moyenne. Ces formules s'appliquent dans le cas d'un cisaillement continu.

Il faut noter que le système de fermeture et d'étanchéité du dispositif empêche toute évaporation vers l'extérieur du solvant contenu dans le produit à mesurer.

La rainure pleine de solvant est très intéressante en cas d'injection de produit en espace clos de manière à créer, avant l'injection du produit, une atmosphère saturée en solvant à la température de mesure, et empêcher ainsi l'évaporation du solvant contenu dans le produit à mesurer.

Dans l'hypothèse où on n'utiliserait pas une injection directe dans la coupelle femelle 2, le produit est disposé à froid dans la coupelle femelle 2. Une fois que l'échantillon est mis en place, on porte l'ensemble à la température de mesure prédéterminée. Dans ce cas également, le solvant de la deuxième rainure 13 crée très rapidement une atmosphère saturée en solvant.

Bien entendu, l'invention n'est nullement limitée au mode de l'exemple décrit et représenté, elle est susceptible de nombreuses variantes accessibles à l'homme de l'art, suivant les applications envisagées et sans s'écarter pour cela du cadre de l'invention.

## Revendications

1. Dispositif de mesure de la viscoélasticité des produits présentant une faible viscosité comprenant une coupelle mâle (1) munie d'une cloison cylindrique de séparation (16a) introduite dans une chambre annulaire (9a) ménagée dans un corps (3) d'une coupelle femelle (2) et recevant le produit à mesurer, et des moyens d'entraînement autour d'un axe de rotation (5) d'une des coupelles par rapport à l'autre, caractérisé en ce qu'il comprend, en outre, des moyens (11, 12, 14, 15) pour fermer de façon étanche ladite chambre annulaire (9a).

2. Dispositif selon la revendication 1, caractérisé en ce que la coupelle mâle (1) comprend une paroi de fermeture (14) qui est pourvue d'une jupe périphérique (15) disposée dans une première rainure (12) ménagée dans un rebord annulaire externe (11) de la coupelle femelle (2).

3. Dispositif selon la revendication 2, caractérisé en ce que la première rainure (12) est remplie d'huile.

4. Dispositif selon l'une quelconque des revendications 2 ou 3, caractérisé en ce qu'une deuxième rainure (13) est ménagée dans le rebord annulaire (11) entre le corps de la coupelle femelle (2) et la première rainure (12).

5. Dispositif selon la revendication 4, caractérisé en ce que la deuxième rainure (13) est remplie d'un solvant.

6. Dispositif selon l'une quelconque des revendications 2 à 5, caractérisé en ce que les rainures (12, 13) sont circulaires et concentriques.

7. Dispositif selon la revendication 1, caractérisé en ce que dans le corps (3) de la coupelle femelle (2) sont ménagées au moins trois, chambres annulaires concentriques (9a, 9b, 9c) autour d'un moyeu creux central (6), chaque chambre annulaire recevant une cloison de séparation (16a, 16b, 16c) solidaire de la coupelle mâle (1).

8. Dispositif selon l'une quelconque des revendications 1 ou 7, caractérisé en ce que chaque cloison de séparation (16a, 16b, 16c) est munie d'au moins un orifice (21) ménagé au-dessus du niveau du produit reçu dans la coupelle femelle (2).

9. Dispositif selon l'une quelconque des revendications 1, 7 ou 8, caractérisé en ce que la coupelle femelle (2) est pourvue de moyens d'admission (20) du produit à mesurer.

10. Dispositif selon la revendication 9, caractérisé en ce que les moyens d'admission sont constitués par un orifice (20) ménagé dans le fond d'une des chambres annulaires.

11. Dispositif selon l'une quelconque des revendications 7 à 10, caractérisé en ce que le rayon des chambres annulaires (9a, 9b, 9c) est croissant du moyeu central (6) vers l'extérieur.

12. Dispositif selon l'une des quelconque des revendications 7 à 11, caractérisé en ce que le moyeu central (6) est creux et ouvert en partie supérieure.

13. Dispositif selon l'une quelconque des revendications précédentes, caractérisé en ce que les cloisons de séparation (16a, 16b, 16c) de la coupelle mâle (1) et les parois cylindriques (8) de la coupelle femelle (2) délimitant entre elles des entrefers étroits (17a à 17f).

14. Dispositif selon la revendication 13, caractérisé en ce que le rayon des entrefers est croissant depuis l'axe de rotation (51) vers l'extérieur.

15. Dispositif selon la revendication 14, caractérisé en ce que les rayons des entrefers sont compris entre 10 mm pour le plus petit et 21,16 mm pour le plus grand.

16. Dispositif selon l'une quelconque des revendications précédentes, caractérisé en ce que la coupelle femelle (2) est animée d'un mouvement de rotation alternatif par rapport à la coupelle mâle fixe (1).

**Patentansprüche**

1. Vorrichtung zum Messen der Viskoelastizität von Erzeugnissen mit einer niedrigen Viskosität, welche ein Einsteckgehäuseteil (1) aufweist, welches mit einer zylindrischen Trennwand (16a) versehen ist, welche in eine Ringkammer (9a) eingesetzt ist, welche in einem Körper (3) eines Aufnahmegehäuseteils (2) vorgesehen ist und das zu messende Erzeugnis aufnimmt, und eine Antriebseinrichtung zum Bewegen einer der Gehäuseteile bezüglich des anderen um eine Drehachse (5) aufweist, **dadurch gekennzeichnet,** daß sie ferner Einrichtungen (11, 12, 14, 15,) zum dichten Verschließen der Ringkammer (9a) aufweist.

2. Vorrichtung nach Anspruch 1, **dadurch gekennzeichnet,** daß das Einsteckgehäuseteil (1) eine Abschlußwand (14) aufweist, welche mit einem Umfangsrand (15) versehen ist, welcher in einer ersten Ausnehmung (12) angeordnet ist, welche in einem äußeren Ringflansch (11) des Aufnahmegehäuseteils (2) vorgesehen ist.

3. Vorrichtung nach Anspruch 2, **dadurch gekenn-**

zeichnet, daß die erste Ausnehmung (12) mit Öl gefüllt ist.

4. Vorrichtung nach einem der Ansprüche 2 oder 3, **dadurch gekennzeichnet,** daß eine zweite Ausnehmung (13) in dem Ringflansch zwischen dem Körper des Aufnahmegehäuseteils (2) und der ersten Ausnehmung (12) vorgesehen ist.

5. Vorrichtung nach Anspruch 4, **dadurch gekennzeichnet,** daß die zweite Ausnehmung (13) mit einem Lösungsmittel gefüllt ist.

6. Vorrichtung nach einem der Ansprüche 2 bis 5, **dadurch gekennzeichnet,** daß die Ausnehmungen (12, 13) kreisförmig und konzentrisch sind.

7. Vorrichtung nach Anspruch 1, **dadurch gekennzeichnet,** daß im Körper (3) des Aufnahmegehäuseteils (2) wenigstens drei konzentrische Ringkammern (9a, 9b, 9c) um ein zentrales Hohlteil (6) vorgesehen sind, wobei jede Ringkammer eine Trennwand (16a, 16b, 16c) aufnimmt, welche einstückig mit dem Einsteckgehäuseteil (1) ausgebildet sind.

8. Vorrichtung nach einem der Ansprüche 1 oder 7, **dadurch gekennzeichnet,** daß jede Trennwand (16a, 16b, 16c) mit wenigstens einer Öffnung (21) versehen ist, welche oberhalb des Niveaus des in dem Aufnahmegehäuseteil (2) aufgenommenen Erzeugnisses angeordnet ist.

9. Vorrichtung nach einem der Ansprüche 1, 7 oder 8, **dadurch gekennzeichnet,** daß das Aufnahmegehäuseteil (2) mit einer Zuleitungseinrichtung (20) für ein zu messendes Erzeugnis versehen ist.

10. Vorrichtung nach Anspruch 9, **dadurch gekennzeichnet,** daß die Zuleitungseinrichtung von einer Öffnung (20) gebildet wird, welche im Boden einer der Ringkammern vorgesehen ist.

11. Vorrichtung nach einem der Ansprüche 7 bis 10, **dadurch gekennzeichnet,** daß der Radius der Ringkammern (9a, 9b, 9c) sich mit dem zentralen Teil (6) außerhalb desselben schneidet.

12. Vorrichtung nach einem der Ansprüche 7 bis 11, **dadurch gekennzeichnet,** daß das zentrale Teil (6) hohl ist und es am oberen Teil offen ist.

13. Vorrichtung nach einem der vorangehenden Ansprüche, **dadurch gekennzeichnet,** daß die Trennwände (16a, 16b, 16c) des Einsteckgehäuseteils (1) und die zylindrischen Wände (8) des Aufnahmegehäuseteils (2) zwischen einander schmale Spalte (17a bis 17f) begrenzen.

14. Vorrichtung nach Anspruch 13, **dadurch gekennzeichnet,** daß der Radius der Spalte auf die Drehachse (51) außerhalb desselben trifft.

15. Vorrichtung nach Anspruch 14, **dadurch gekennzeichnet,** daß die Radien der Spalte Abmessungen zwischen 10 mm als kleinste Abmessung und 21,16 mm als größte Abmessung haben.

16. Vorrichtung nach einem der vorangehenden Ansprüche, **dadurch gekennzeichnet,** daß das Aufnahmegehäuseteil (2) zur Ausführung einer hin- und hergehenden Drehbewegung bezüglich des festen Einsteckgehäuseteils (1) angetrieben ist.

**Claims**

1. A measuring device of the viscoelasticity of products having low viscosity including a male cupel (1) with a cylindrical separating partition (16a) disposed into an annular chamber (9a) provided in a body (3) of a female cupel (2), and receiving the product to be measured, and drive mechanisms for movement around an axis of rotation (5) of one of the cupels in relation to the other, characterized in that it further includes means (11, 12, 14, 15) to close in an impervious manner said annular chamber (9a).

2. Device according to claim 1, characterized in that the male cupel (1) has a closure wall (14) which is provided with a peripheral skirt (15) in a first groove (12) arranged in an external annular rim (11) of the female cupel (2).

3. Device according to claim 2, characterized in that the first groove (12) is filled with oil.

4. Device aacording to claim 2 or 3, characterized in that a second groove (13) is arranged in the annular rim (11) between the body of the female cupel (2) and the first groove (12).

5. Device according to claim 4, characterized in that the second groove (13) is filled with a solvent.

6. Device according to any one of claims 2 to 5, characterized in that the grooves (12, 13) are circular and concentric.

7. Device according to claim 1, characterized in that at least three concentric annular chambers (9a, 9b, 9c) are provided in the body (3) of the female cup around a central hollow hub (6), each annular chamber receiving a separating partition (16a, 16b, 16c) integral with the male cupel (1).

8. Device according to any of the claims 1 to 7, characterized in that each of the separating partitions (16a, 16b, 16c) has at least one opening (21) arranged above the level of the product received in the female cupel (2).

9. Device according to any of the claims 1, 7 and 8, characterized in that the femal cupel (2) is provided with an inlet (20) for the introduction of the product to be measured.

10. Device according to claim 9, characterized in that the inlet of the product consists of an opening (20) arranged in the bottom of one of the annular chambers.

11. Device according to any of the claims 7 to 10, characterized in that the radius of the annular chambers (9a, 9b, 9c) increases from the hub (6) towards the outside.

12. Device according to any one of the claims 7 to 11, characterized in that the central hub (6) is hollow and open at its stop.

13. Device according to any of the preceding claims, characterized in that the separating partitions (16a, 16b, 16c) of the male cupel (1) and the cylindrical walls (8) of the female cupel (2) serve together to delimit narrow spaces (17a to 17f).

14. Device according to claim 13, characterized in that the radius of the spaces (17a to 17f) increases from the axis of rotation (5) towards the outside.

15. Device according to claim 14, characterized in that the radii of the spaces are between 10 mm for the smallest to 21.16 mm for the largest.

16. Device according to any of the preceding claims, characterized in that the female cupel (2) is driven in an alternating rotary movement with respect to the fixed male cupel (1).

EP 0 602 142 B1

7